# EUROPEAN PATENT APPLICATION

(11) **EP 4 672 702 A1**
(43) Date of publication of application: **31.12.2025**
(21) Application number: 24216533.0
(22) Date of filing: 29.11.2024
(51) Int. Cl.: H04L 45/00, H04L 45/02, H04L 45/28

(54) **METHOD AND APPARATUS FOR TRAFFIC FORWARDING**

(30) Priority: 27.06.2024 CN 202410853226
(71) Applicant: New H3C Technologies Co., Ltd., Hangzhou, Zhejiang 310052 (CN)
(72) Inventor: ZHAO, Haifeng, Beijing, 100102 (CN)
(74) Representative: 2SPL Patentanwälte PartG mbB

(57) **Abstract**

Disclosed are a method and an apparatus for traffic forwarding. In a example of the present disclosure, routing information published by a remote leaf node is received. A next-hop list corresponding to a computing power node connected to the remote leaf node is determined based on the received routing information. For any computing power node connected to the remote leaf node, a target next-hop from the next-hop list corresponding to the computing power node is selected based on a routing policy index of the computing power node; a forwarding entry for the computing power node is generated based on a host route of the computing power node and the corresponding target next-hop, and traffic sent to the computing power node is forwarded based on the forwarding entry.

## Description

### TECHNICAL FIELD

The present disclosure relates to the field of Artificial Intelligence (AI) large models and network communication technologies, particularly to a method and apparatus for traffic forwarding.

### BACKGROUND

The AI large model network refers to the computing and communication infrastructure that supports the training and operation of large artificial intelligence models.

The AI large model network is characterized by periodic fluctuations in traffic and high data traffic volume. Therefore, traffic collisions are prone to occur in actual networking scenarios.

For example, when multiple computing power nodes simultaneously send traffic to computing power nodes under the same Leaf node, traffic collisions are likely to occur at the downstream port of the Spine node connected to that Leaf node, causing traffic congestion.

### SUMMARY

The present disclosure provides a method and apparatus for traffic forwarding to address the issue of traffic congestion that is prone to occur in existing AI large model networks.

According to a first aspect of embodiments of the present disclosure, a method for traffic forwarding is provided, including:
receiving routing information published by a remote leaf node; where the routing information includes a host route of a computing power node connected to the remote leaf node and a routing policy index of the computing power node;
determining a next-hop list corresponding to the computing power node connected to the remote leaf node based on the received routing information;
for any computing power node connected to the remote leaf node, selecting a target next-hop from the next-hop list corresponding to the computing power node based on the routing policy index of the computing power node; where for different leaf nodes, the same target next-hop corresponds to the same computing power node connected to the same remote leaf node; and for the same leaf node, different target next-hops correspond to different computing power nodes connected under the same remote leaf node;
generating a forwarding entry for the computing power node based on the host route of the computing power node and the corresponding target next-hop, and forwarding traffic sent to the computing power node based on the forwarding entry.

According to a second aspect of embodiments of the present disclosure, an apparatus for traffic forwarding is provided, including:
a processor and non-transitory machine-readable storage medium,
where the non-transitory machine-readable storage medium is to store machine-executable instructions, the processor is to execute the instructions to perform operations including:
receiving routing information published by a remote leaf node; where the routing information includes a host route of a computing power node connected to the remote leaf node and a routing policy index of the computing power node;
determining a next-hop list corresponding to the computing power node connected to the remote leaf node based on the received routing information;
for any computing power node connected to the remote leaf node, selecting a target next-hop from the next-hop list corresponding to the computing power node based on the routing policy index of the computing power node; where for different leaf nodes, the same target next-hop corresponds to the same computing power node connected to the same remote leaf node; and for the same leaf node, different target next-hops correspond to different computing power nodes connected under the same remote leaf node;
generating a forwarding entry for the computing power node based on the host route of the computing power node and the corresponding target next-hop, and forwarding traffic sent to the computing power node based on the forwarding entry.

By applying the technical solution disclosed in the present disclosure, by receiving routing information published by a remote leaf node, determining a next-hop list corresponding to computing power nodes connected to the remote leaf node based on the received routing information, for any computing power node connected to the remote Leaf node, selecting a target next-hop from the next-hop list corresponding to the computing power node based on the routing policy index of the computing power node, and generating a forwarding entry for the computing power node based on the host route of the computing power node and the corresponding target next-hop, traffic sent to the computing power node can then be forwarded according to the forwarding entry. By setting routing policy indexes for computing power nodes and selecting target next-hops for computing power nodes based on the routing policy indexes, for different Leaf nodes, the same target next-hop corresponds to the same computing power node connected to the same remote leaf node, and for the same leaf node, different target next-hops correspond to different computing power nodes connected under the same remote Leaf node, thereby reducing the probability of traffic congestion in AI large model networks.

### BRIEF DESCRIPTION OF DRAWINGS

FIG. 1 is a flowchart illustrating a method for traffic forwarding provided by an embodiment of the present disclosure.
FIG. 2 is a schematic diagram of a specific application scenario provided by an embodiment of the present disclosure.
FIG. 3 is a schematic diagram of topology information of the entire network maintained by a Leaf node provided by an embodiment of the present disclosure.
FIG. 4 is a schematic diagram of traffic forwarding provided by an embodiment of the present disclosure.
FIG. 5 is a structural diagram of an apparatus for traffic forwarding provided by an embodiment of the present disclosure.

### DETAILED DESCRIPTION

To enable those skilled in the art to better understand the technical solutions in the embodiments of the present disclosure and to make the aforementioned objectives, features, and advantages of the embodiments of the present disclosure more apparent and comprehensible, further detailed descriptions of the technical solutions in the embodiments of the present disclosure are provided below in conjunction with the accompanying drawings.

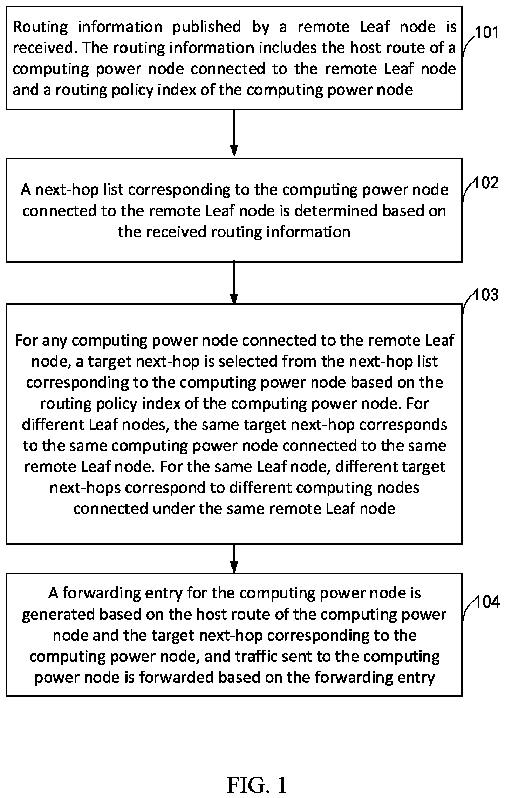

Please refer to FIG. 1, which is a flowchart illustrating a method for traffic forwarding provided by an embodiment of the present disclosure. This traffic forwarding method can be applied to Leaf nodes in an AI large model network based on a Leaf-Spine network architecture. As shown in FIG. 1, the traffic forwarding method can include the following steps:
In Process 101, routing information published by a remote Leaf node is received. The routing information includes the host route of a computing power node connected to the remote Leaf node and a routing policy index of the computing power node.

In an embodiment of the present disclosure, when a Leaf node learns the host route information of a computing power node locally accessed, it can publish the host route information of the computing power node to remote Leaf nodes.

In an embodiment of the present disclosure, to make a more reasonable selection of traffic forwarding links, for any computing power node accessed under any Leaf node, a routing policy index (also referred to as an extended policy index) can be set for the computing power node. The routing policy index is used to assist in selecting the forwarding link for traffic sent to the computing power node.

When a Leaf node publishes the host route of a computing power node to a remote Leaf node, it can also publish the routing policy index of the computing power node to the remote Leaf node.

In Process 102, a next-hop list corresponding to the computing power node connected to the remote Leaf node is determined based on the received routing information.

In an embodiment of the present disclosure, a Leaf node can obtain the host route of the computing power node connected to the remote Leaf node, the routing policy index of the computing power node, and the next-hop list corresponding to the computing power node through route resolution based on the routing information published by the remote Leaf node.

In Process 103, for any computing power node connected to the remote Leaf node, a target next-hop is selected from the next-hop list corresponding to the computing power node based on the routing policy index of the computing power node. For different Leaf nodes, the same target next-hop corresponds to the same computing power node connected to the same remote Leaf node. For the same Leaf node, different target next-hops correspond to different computing nodes connected under the same remote Leaf node.

In an embodiment of the present disclosure, to reduce the probability of traffic congestion in the AI large model network, when selecting a next-hop (which can be referred to as a target next-hop) for a computing power node connected to a remote Leaf node, the selection can be made based on the routing policy index of the computing power node. The principle is that for different Leaf nodes, the same target next-hop corresponds to the same computing power node connected to the same remote Leaf node, and for the same Leaf node, different target next-hops correspond to different computing power nodes connected under the same remote Leaf node.

Since, for an AI large model network, multiple computing power nodes usually do not simultaneously access the same computing power node under the same remote Leaf node, effectively avoiding traffic congestion at the downstream ports of Spine nodes can be achieved by ensuring that for different Leaf nodes, the same target next-hop corresponds to the same computing power node connected to the same remote Leaf node, and for the same Leaf node, different target next-hops correspond to different computing power nodes connected under the same remote Leaf node.

In Process 104, a forwarding entry for the computing power node is generated based on the host route of the computing power node and the target next-hop corresponding to the computing power node, and traffic sent to the computing power node is forwarded based on the forwarding entry.

In an embodiment of the present disclosure, after selecting a target next-hop for the computing power node in the manner described above, a forwarding entry for the computing power node can be generated based on the host route of the computing power node and the target next-hop corresponding to the computing power node.

After generating the forwarding entry for the computing power node, traffic sent to the computing power node can be forwarded based on the forwarding entry.

For example, the forwarding entry can be issued to a forwarding engine, which forwards traffic sent to the computing power node based on the forwarding entry.

It can be seen that in the method flow shown in FIG. 1, by receiving routing information published by a remote Leaf node, a next-hop list corresponding to a computing power node connected to the remote Leaf node is determined based on the received routing information, for any computing power node connected to the remote Leaf node, a target next-hop is selected from the next-hop list corresponding to the computing power node based on the routing policy index of the computing power node, and a forwarding entry is generated for the computing power node based on the host route of the computing power node and the target next-hop corresponding to the computing power node, further, traffic sent to the computing power node can be forwarded based on the forwarding entry. By setting a routing policy index for the computing power node and selecting a target next-hop for the computing power node based on the routing policy index, for different Leaf nodes, the same target next-hop corresponds to the same computing power node connected to the same remote Leaf node, and different target next-hops correspond to different computing power nodes connected under the same remote Leaf node, the probability of traffic congestion in the AI large model network is reduced.

To enable those skilled in the art to better understand the technical solution provided by the embodiments of the present disclosure, the technical solution provided by the embodiments of the present disclosure is described below in conjunction with specific application scenarios.

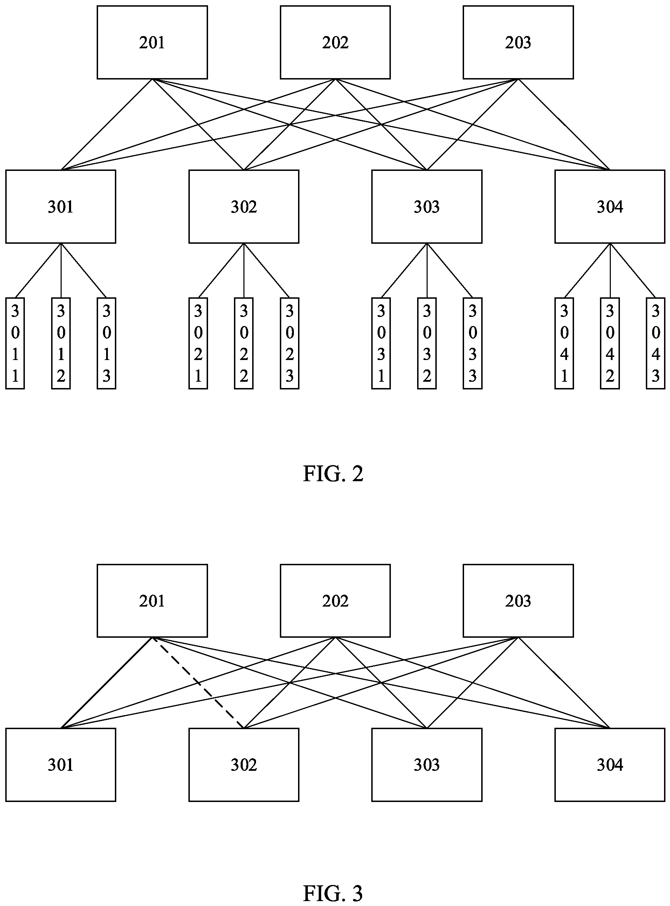

Please refer to FIG. 2, which is a schematic diagram of a specific application scenario provided by an embodiment of the present disclosure. As shown in FIG.2, in this application scenario, Spine nodes 201 to 203 are each connected to Leaf nodes 301 to 304 through different ports (not shown in FIG. 2), and the Leaf nodes 301 to 304 are each connected to the Spine nodes 201 to 203 through different ports (not shown in FIG. 2). Each Leaf node is connected to multiple computing power nodes through different ports.

For example, as shown in FIG. 2, the Leaf node 301 is connected to computing power nodes 3011 to 3013 through different ports, the Leaf node 302 is connected to computing power nodes 3021 to 3023 through different ports, and the Leaf node 303 is connected to computing power nodes 3031 to 3033 through different ports.

In this embodiment, the computing power nodes can be characterized by Graphics Processing Units (GPUs).

In this embodiment, for the traffic destined for each GPU across the entire network, a unique global downstream port can be assigned to the GPU at the Spine node based on the host route corresponding to the destination GPU.

To achieve the above functionality, the Leaf nodes may generate corresponding host routes based on the ARP corresponding to the local GPU. When publishing the routes, the routing information published can carry the routing policy index of the local GPU.

In some examples, the routing policy index can include a main index and a sub-index.

The sub-index is used to identify the target port, and the main index is used to identify the Leaf node.

In some examples, the main index can be a device number (Leaf node number) across the entire network. For example, a number of the Leaf node 301 can be 1, a number of the Leaf node 302 can be 2, and a number of the Leaf node 3 can be 3. The sub-index can be a port number of a port on the Leaf node that connects to the GPU. For example, for Leaf node 301, the port numbers of the ports connecting to the GPUs 3011 to 3013 can be 1 to 3 in sequence; for the Leaf node 302, the port numbers of the ports connecting to the GPUs 3021 to 3023 can be 1 to 3 in sequence; for Leaf node 303, the port numbers of the ports connecting to the GPUs 3031 to 3033 can be 1 to 3 in sequence; and for Leaf node 304, the port numbers of the ports connecting to GPUs 3041 to 3043 can be 1 to 3 in sequence.

It should be noted that the routing policy index of the GPU can also be configured manually.

The host routes and routing policy indexes for the GPUs 3011 to 3013 connected to the Leaf node 301 can be as shown in Table 1-1.

**Table 1-1**

| route prefix | mask | routing policy index |
|---|---|---|
| 10.0.0.1 | 32 | 1: 1 |
| 10.0.0.2 | 32 | 1: 2 |
| 10.0.0.3 | 32 | 1: 3 |

The host routes and routing policy indexes for GPUs 3021 to 3023 connected to Leaf node 302 can be as shown in Table 1-2.

**Table 1-2**

| route prefix | mask | routing policy index |
|---|---|---|
| 20.0.0.1 | 32 | 2: 1 |
| 20.0.0.2 | 32 | 2: 2 |
| 20.0.0.3 | 32 | 2: 3 |

The host routes and routing policy indexes for GPUs 3031 to 3033 connected to the Leaf node 303 are as shown in Table 1-3.

**Table 1-3**

| route prefix | mask | routing policy index |
|---|---|---|
| 30.0.0.1 | 32 | 3: 1 |
| 30.0.0.2 | 32 | 3: 2 |
| 30.0.0.3 | 32 | 3: 3 |

The host routes and routing policy indexes for the GPUs 3041 to 3043 connected to the leaf node 304 are as shown in Table 1-4.

**Table 1-4**

| route prefix | mask | routing policy index |
|---|---|---|
| 40.0.0.1 | 32 | 4: 1 |
| 40.0.0.2 | 32 | 4: 2 |
| 40.0.0.3 | 32 | 4: 3 |

In Tables 1-1 to 1-4, the routing policy index indicates the Leaf node port connected to each GPU. The routing policy index of 2:1 indicates that GPU3021 is connected to port 2 of the leaf node 302.

When the leaf nodes 301-304 advertise Border Gateway Protocol ( BGP) routes, the leaf nodes 301-304 can carry the routing policy indexes of the GPUs through BGP private extended communities.

When the leaf nodes 301-304 advertise Open Shortest Path First (OSPF) routes, the routing policy indexes of the GPUs can be carried through extended Type-Length-Values (TLVs).

Upon receiving route information advertised by the remote leaf nodes, a Leaf node parses the received route information to obtain the host routes, routing policy indexes, and next-hop lists of the computing power nodes connected to the remote the leaf nodes, as well as other information.

The information obtained by a parse on the route information by the Leaf node 301 is shown in Table 2.

**Table 2**

| route prefix | mask | routing policy index | next hop list |
|---|---|---|---|
| 20.0.0.1 | 32 | 2: 1 | 2.0.0.1, 2.0.0.2, 2.0.0.3 |
| 20.0.0.2 | 32 | 2: 2 | 2.0.0.1, 2.0.0.2, 2.0.0.3 |
| 20.0.0.3 | 32 | 2: 3 | 2.0.0.1, 2.0.0.2, 2.0.0.3 |
| 30.0.0.1 | 32 | 3: 1 | 2.0.0.1, 2.0.0.2, 2.0.0.3 |
| 30.0.0.2 | 32 | 3: 2 | 2.0.0.1, 2.0.0.2, 2.0.0.3 |
| 30.0.0.3 | 32 | 3: 3 | 2.0.0.1, 2.0.0.2, 2.0.0.3 |
| 40.0.0.1 | 32 | 4: 1 | 2.0.0.1, 2.0.0.2, 2.0.0.3 |
| 40.0.0.2 | 32 | 4: 2 | 2.0.0.1, 2.0.0.2, 2.0.0.3 |
| 40.0.0.3 | 32 | 4: 3 | 2.0.0.1, 2.0.0.2, 2.0.0.3 |

Where 30.0.0.1 to 30.0.0.3 represent the host routes of GPUs 3031 to 3033 connected to the leaf node 303 in sequence, with a routing policy index of 3:X, indicating that the GPUs are connected through ports numbered X (e.g., 1, 2, or 3) on the leaf node numbered 3 (i.e., the aforementioned leaf node 303), corresponding to GPUs 3031, 3032, or 3033 mentioned above. The next hops 2.0.0.1, 2.0.0.2, and 2.0.0.3 correspond to the Spine nodes 201 to 203 in sequence.

In this embodiment, besides maintaining the aforementioned routing information, the leaf nodes also locally maintain information of directly connected neighbors.

For example, taking the leaf node 301 as an example, the information of the directly connected neighbors can be as shown in Table 3.

**Table3**

| neighbor route id | neighbor next-hop |
|---|---|
| 1 | 2.0.0.1 |
| 2 | 2.0.0.2 |
| 3 | 2.0.0.3 |

In In this embodiment, based on routing protocols, the leaf nodes also maintain overall network topology information.

For example, the overall network topology information maintained by the leaf nodes can be as shown in FIG. 3, where dashed lines indicate non-existent or faulty links.

As shown in FIG. 3, there is a faulty link between the Spine node 201 and the leaf node 302.

In this embodiment, when routing for GPUs, the leaf nodes 301-304 select routes to reach GPUs accessed by the remote leaf nodes in the network based on the same routing policy.

For example, taking the leaf node 301 as an example, assume the leaf node 301 receives a route with a prefix of 20.0.0.2, a mask of 32, and a policy index of 1:2. The leaf 301 neighbor list is 2.0.0.1, 2.0.0.2, and 2.0.0.3. After sorting based on a preset sorting strategy (taking sorting from smallest to largest as an example), the sorted next-hop list of the leaf 301 is 2.0.0.1, 2.0.0.2, and 2.0.0.3. The sub-index in the policy index is 2, corresponding to a routing policy of selecting the second IP address (2.0.0.2) in the sorted neighbor next-hops. If this neighbor IP address (2.0.0.2) exists in the next-hop list of the leaf 301, it is selected as the target next-hop, a forwarding entry is generated, and it is issued to the forwarding engine; if the neighbor IP address does not exist in the next-hop list of the leaf 301, a standby target next-hop is selected for forwarding, and the relevant forwarding entry is issued to the forwarding engine upon completion of route calculation.

It should be noted that for scenarios where the number of ports connecting computing power nodes on the leaf nodes exceeds the number of neighbor next-hops, for example, when the number of ports connecting computing power nodes on a the leaf node exceeds the number of neighbor next-hops, sorting and sub-index matching can include: taking the modulus of the sub-index by the number of neighbor next-hops, with the sorting matching the modulus result; wherein, in the case where the result of taking the modulus of the sub-index by the number of neighbor next-hops is 0, the modulus result is set to the sub-index itself.

Additionally, for any computing power node, after determining the target neighbor next-hop in the manner described above, if the target neighbor next-hop is not included in the next-hop list corresponding to the computing power node, a standby target neighbor next-hop can be determined, and the standby target neighbor next-hop is taken as the standby target next-hop. Specific implementation methods can be found in the relevant descriptions below for cases where the target next-hop encounters abnormalities, and will not be elaborated further in this embodiment of the disclosure.

In this embodiment, based on the networking shown in FIG. 2, taking the leaf node 301 as an example, target next-hop information can be as shown in Table 4:

**Table4**

| route prefix | mask | routing policy index | next hop |
|---|---|---|---|
| 20.0.0.1 | 32 | 2: 1 | 2.0.0.1 |
| 20.0.0.2 | 32 | 2: 2 | 2.0.0.2 |
| 20.0.0.3 | 32 | 2: 3 | 2.0.0.3 |
| 30.0.0.1 | 32 | 3: 1 | 2.0.0.1 |
| 30.0.0.2 | 32 | 3: 2 | 2.0.0.2 |
| 30.0.0.3 | 32 | 3: 3 | 2.0.0.3 |
| 40.0.0.1 | 32 | 4: 1 | 2.0.0.1 |
| 40.0.0.2 | 32 | 4: 2 | 2.0.0.2 |
| 40.0.0.3 | 32 | 4: 3 | 2.0.0.3 |

As shown in Table 4, for the same leaf node, GPUs connected to ports with the same port number under different remote leaf nodes correspond to the same target next-hop. For example, the target next-hop for the GPU (i.e., GPU3021) connected to the port numbered 1 on the leaf node 302, the GPU (i.e., GPU3031) connected to the port numbered 1 on the leaf node 303, and the GPU (i.e., GPU3041) connected to the port numbered 1 on the leaf node 304 all correspond to the same target next-hop, which is 2.0.0.1.

GPUs connected to ports with the different port numbers under the same remote Leaf node correspond to different target next-hops. For example, the target next-hop for the GPU (i.e., GPU3021) connected to the port numbered 1 on the leaf node 302 is 2.0.0.1, while the target next-hop for the GPU (i.e., GPU3022) connected to the port numbered 2 on the leaf node 302 is 2.0.0.2.

Based on the networking shown in FIG. 2, taking the leaf node 302 as an example, for remote the leaf node 303, the information of the target next-hop can be as shown in Table 5:

**Table5**

| route prefix | mask | routing policy index | next hop |
|---|---|---|---|
| 30.0.0.1 | 32 | 3: 1 | 2.0.0.1 |
| 30.0.0.2 | 32 | 3: 2 | 2.0.0.2 |
| 30.0.0.3 | 32 | 3: 3 | 2.0.0.3 |

As shown in Tables 4 and 5, for different the leaf nodes, the same GPU connected to the same remote Leaf node corresponds to the same target next-hop.

For example, for the leaf nodes 301, 302, and 304, the target next-hop for GPU3031 connected by the leaf node 303 is 2.0.0.1 for all.

For the leaf nodes 301, 302, and 304, the target next-hop for GPU3032 connected by the leaf node 303 is 2.0.0.2 for all.

For the leaf nodes 301, 302, and 304, the target next-hop for GPU3033 connected by the leaf node 303 is 2.0.0.3 for all.

Based on the aforementioned routing strategy, different computing power nodes under the same Leaf node correspond to different target next-hops on the side of each remote Leaf node. Since, in an AI large model network, multiple computing power nodes usually do not access the same computing power node under the same remote node simultaneously, the target next-hops for GPUs under different Leaf nodes destined for the same GPU connected to a remote Leaf node can be set to be the same.

Through the aforementioned implementation, the probability of traffic congestion occurring at the Spine nodes can be effectively reduced.

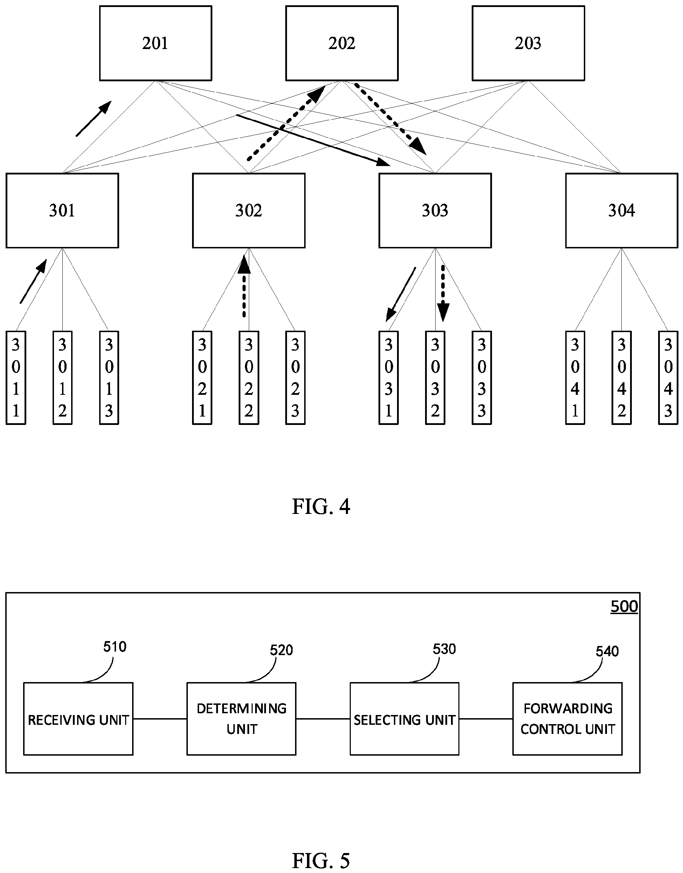

Taking the networking shown in FIG. 2 as an example, assume that at a certain moment, GPU3011 connected to the leaf node 301 sends traffic to GPU3031 connected to the leaf node 303 at line speed, and GPU3022 connected to the leaf node 302 sends traffic to GPU3032 connected to the leaf node 303 at line speed. According to the aforementioned routing strategy, the next-hop for the traffic from GPU3011 to GPU3031 is 2.0.0.1 (corresponding to the Spine node 201), and the next-hop for the traffic from GPU3022 to GPU3032 is 2.0.0.2 (corresponding to the Spine node 202). This means that traffic from different remote leaf nodes accessing different GPUs on the same Leaf node can be forwarded through different Spine nodes, effectively reducing the probability of traffic congestion occurring at the downstream ports (ports connecting to the leaf nodes) of the Spine nodes. The traffic forwarding diagram can be as shown in FIG. 4.

As shown in FIG. 4, the forwarding path for the traffic from GPU3011 to GPU3031 can be indicated by solid arrows in the diagram, and the forwarding path for the traffic from GPU3022 to GPU3032 can be indicated by dashed arrows.

In this embodiment, when a link failure occurs, a switch to a standby link can be made.

A standby target next-hop can be selected from the next-hop list corresponding to the computing power node based on its sub-index and main index.

Assuming that the link between the leaf node 301 and the Spine node 201 fails, the traffic from the leaf node 301 destined for GPUs connected to ports numbered 1 on various remote Leaf nodes (such as GPU3021, GPU3031, GPU3041) needs to be switched to a standby link.

When switching to a standby link, if the traffic from the leaf node 301 destined for GPUs connected to ports numbered 1 on various remote Leaf nodes is all switched to the same standby link, for example, all next-hops are switched to those corresponding to the Spine node 202, it can easily lead to congestion of this traffic with the traffic from the leaf node 301 destined for GPUs connected to ports numbered 2 on various remote Leaf nodes (such as GPU3022, GPU3032, GPU3042) upstream. Therefore, the traffic from the leaf node 301 destined for GPUs connected to ports numbered 1 on various remote Leaf nodes needs to be dispersed as much as possible.

In some examples, for the same Leaf node, the standby target next-hops for computing power nodes connected to ports with the same port number on different remote Leaf nodes are not completely the same.

In cases where the number of optional standby next-hops is greater than or equal to the number of computing power nodes connected to a single Leaf node, for the same leaf node, the standby target next-hops for computing power nodes connected to ports with the same port number on different remote Leaf nodes are different.

In this embodiment, in the case of a link failure between the leaf node 301 and the Spine node 201, the standby target next-hop can be determined based on the main index and sub-index in the routing policy index corresponding to the GPUs connected to ports numbered 1 on various remote Leaf nodes.

In some examples, a new index can be obtained by adding the main index and sub-index in the routing policy index, and the standby target next-hop can be determined based on this new index.

Taking the link failure between the leaf node 301 and the Spine node 201 as an example, for the leaf node 301, the information of its corresponding remote Leaf nodes' GPUs (i.e., GPUs whose target next-hop corresponds to the Spine node 201) can be as shown in Table 6:

**Table6**

| route prefix | mask | routing policy index | next hop list |
|---|---|---|---|
| 20.0.0.1 | 32 | 2: 1 | 2.0.0.2, 2.0.0.3 |
| 30.0.0.1 | 32 | 3: 1 | 2.0.0.2, 2.0.0.3 |
| 40.0.0.1 | 32 | 4: 1 | 2.0.0.2, 2.0.0.3 |

The information of the direct neighbors maintained by the leaf node 301 can be presented as shown in Table 3.

For routing prefix 20.0.0.1, based on the main index (2) and sub-index (1) of the routing policy index, a neighbor next-hop matching the sum of the main index and the sub-index (1+2=3), namely 2.0.0.3, is selected from the sorted neighbor next-hops as the standby target neighbor next-hop. Since this standby target neighbor next-hop exists in the next-hop list, it can be taken as the standby target next-hop.

For routing prefix 30.0.0.1, based on the main index (3) and sub-index (1) of the routing policy index, a neighbor next-hop matching the sum of the main index and the sub-index (1+3=4) is selected from the sorted neighbor next-hops as the standby target neighbor next-hop. Since 4 > 3 (the number of neighbor next-hops), the result of 4 modulo 3 (i.e., 1) is used to select the standby target neighbor next-hop from the sorted neighbor next-hops, resulting in neighbor next-hop 2.0.0.1. This neighbor next-hop is the same as the target next-hop, so the next neighbor next-hop of this neighbor next-hop (i.e., 2.0.0.2) is determined as the standby target neighbor next-hop. Since this standby target neighbor next-hop exists in the next-hop list, it can be taken as the standby target next-hop.

For routing prefix 30.0.0.1, based on the main index (4) and sub-index (1) of the routing policy index, a neighbor next-hop matching the sum of the main index and the sub-index (1+4=5) is selected from the sorted neighbor next-hops as the standby target neighbor next-hop. Since 5 > 3 (the number of neighbor next-hops), the result of 5 modulo 3 (i.e., 2) is used to select the standby target neighbor next-hop from the sorted neighbor next-hops, resulting in neighbor next-hop 2.0.0.2. Since this standby target neighbor next-hop exists in the next-hop list, it can be taken as the standby target next-hop.

For the Leaf node 301, the standby target next-hops corresponding to the GPUs connected to the ports numbered 1 on each remote leaf node can be presented as shown in Table 7.

**Table7**

| route prefix | mask | routing policy index | next hop |
|---|---|---|---|
| 20.0.0.1 | 32 | 2: 1 | 2.0.0.1→2.0.0.3 |
| 30.0.0.1 | 32 | 3: 1 | 2.0.0.1→2.0.0.2 |
| 40.0.0.1 | 32 | 4: 1 | 2.0.0.1→2.0.0.2 |

It should be noted that, in the embodiment of the present disclosure, when selecting a standby target neighbor next-hop, if the selected standby target neighbor next-hop is the same as the selected target neighbor next-hop (the neighbor next-hop corresponding to the abnormal target next-hop), the standby target neighbor next-hop can be reselected. For example, the next neighbor next-hop after the currently selected standby target neighbor next-hop can be taken as the standby target neighbor next-hop.

In addition, after determining the standby target neighbor next-hop based on the aforementioned manner, if the standby target neighbor next-hop is not included in the next-hop list corresponding to the computing power node, the selection of the standby target neighbor next-hop can be redone. For example, the next neighbor next-hop after the standby target neighbor next-hop in the sorted neighbor next-hops based on a preset sorting strategy can be taken as the standby target neighbor next-hop.

In this embodiment, for any GPU, when the corresponding target next-hop of the GPU recovers from an abnormality, a next-hop switchback process can be performed.

Taking Leaf node 301 as an example again, assuming that the link between the leaf node 301 and the Spine node 201 recovers from a failure, then after the failure recovery, for Leaf node 301, the target next-hops corresponding to the GPUs connected to the ports numbered 1 on each remote Leaf node can be presented as shown in Table 8.

**Table8**

| route prefix | mask | routing policy index | next hop |
|---|---|---|---|
| 20.0.0.1 | 32 | 2: 1 | 2.0.0.1←2.0.0.3 |
| 30.0.0.1 | 32 | 3: 1 | 2.0.0.1←2.0.0.2 |
| 40.0.0.1 | 32 | 4: 1 | 2.0.0.1←2.0.0.2 |

Please refer to FIG. 5, which is a structural diagram of a traffic forwarding apparatus provided in an embodiment of the present disclosure. This traffic forwarding apparatus 500 can be deployed in a leaf node of an AI large model network based on a leaf-spine network architecture. As shown in FIG. 5, the traffic forwarding apparatus can include:
a receiving unit 510 for receiving routing information published by a remote leaf node, where the routing information includes host routes of computing power nodes connected to the remote leaf node and routing policy indexes of the computing power nodes;
a determining unit 520 for determining a next-hop list corresponding to the computing power nodes connected to the remote leaf node based on the received routing information;
] a selecting unit 530 for selecting a target next-hop from the next-hop list corresponding to each computing power node connected to the remote leaf node based on the routing policy index of the computing power node, where for different leaf nodes, the target next-hop corresponding to the same computing power node connected to the same remote leaf node is the same; for the same leaf node, the target next-hops corresponding to different computing power nodes connected under the same remote leaf node are different;
a forwarding control unit 540 for generating a forwarding entry for the computing power node based on the host route of the computing power node and the corresponding target next-hop, and forwarding traffic sent to the computing power node based on the forwarding entry.

In some embodiments, for any computing power node, the routing policy index corresponding to the computing power node includes a sub-index used to identify a target port. The target port is the port on a target leaf node connecting to the computing power node, and the target leaf node is the leaf node connecting to the computing power node.

The selecting unit 530 selects the target next-hop from the next-hop list corresponding to the computing power node based on the routing policy index of the computing power node, including:
Selecting a target neighbor next-hop whose sorting matches the sub-index from neighbor next-hops sorted based on a preset sorting strategy based on the sub-index corresponding to the computing power node.
determining the target neighbor next-hop as the target next-hop if the target neighbor next-hop is included in the next-hop list corresponding to the computing power node.

For the same leaf node, the target neighbor next-hops corresponding to computing power nodes connected by ports with the same port number on different remote leaf nodes are the same.

In some embodiments, the sub-index is the port number of the target port.

In some embodiments, for any computing power node, the routing policy index corresponding to the computing power node includes a main index used to identify the target leaf node.

The selecting unit 530 is also used for, for any computing power node, selecting a standby target next-hop from the next-hop list corresponding to the computing power node based on the sub-index and the main index corresponding to the computing power node if the target next-hop corresponding to the computing power node is abnormal. Where for the same leaf node, the standby target next-hops corresponding to computing power nodes connected by ports with the same port number on different remote leaf nodes are not completely the same.

The forwarding control unit 540 is also used for generating a standby forwarding entry for the computing power node based on the host route of the computing power node and the corresponding standby target next-hop, and forwarding traffic sent to the computing power node based on the standby forwarding entry.

In some embodiments, the selecting unit 530 selects the standby target next-hop from the next-hop list corresponding to the computing power node based on the sub-index and the main index corresponding to the computing power node, including:
selecting a standby target neighbor next-hop whose sorting matches a sum of the sub-index and the main index from neighbor next-hops sorted based on a preset sorting strategy based on the sub-index and the main index corresponding to the computing power node;
determining a standby target neighbor next-hop as the standby target next-hop if the standby target neighbor next-hop is included in the next-hop list corresponding to the computing power node.

In some embodiments, the forwarding control unit 540 is also used for, for any computing power node, generating a forwarding entry for the computing power node based on the host route of the computing power node and the corresponding target next-hop if the target next-hop corresponding to the computing power node recovers from an abnormality, and forwarding traffic sent to the computing power node based on the forwarding entry.

In some examples, the receiving unit 510, the determining unit 520, the selecting unit 530 and forwarding control unit 540 may be implemented by hardware, for instance by hardware circuitry of an application specific integrated chip (ASIC), field programmable gate array (FPGA), or by a processor executing machine readable instructions. When implemented by an ASIC or FPGA, the receiving unit 510, the determining unit 520, the selecting unit 530 and forwarding control unit 540 may be implemented by separate hardware devices or as separate modules of a single hardware device.

The realization processes of the functions and roles of each unit in the aforementioned apparatus are specifically detailed in the realization processes of the corresponding steps in the aforementioned method, and will not be repeated here.

## Claims

1. A method for traffic forwarding, comprising:
(101) receiving routing information published by a remote leaf node; wherein the routing information comprises a host route of a computing power node connected to the remote leaf node and a routing policy index of the computing power node;
(102) determining a next-hop list corresponding to the computing power node connected to the remote leaf node based on the received routing information;
(103) for any computing power node connected to the remote leaf node, selecting a target next-hop from the next-hop list corresponding to the computing power node based on the routing policy index of the computing power node; wherein for different leaf nodes, the same target next-hop corresponds to the same computing power node connected to the same remote leaf node; and for the same leaf node, different target next-hops correspond to different computing power nodes connected under the same remote leaf node;
(104) generating a forwarding entry for the computing power node based on the host route of the computing power node and the corresponding target next-hop, and
(104) forwarding traffic sent to the computing power node based on the forwarding entry.

2. The method of claim 1, wherein for any computing power node, the routing policy index corresponding to the computing power node comprises a sub-index for identifying a target port, and the target port is a port on a target leaf node and connecting to the computing power node, and the target leaf node is a leaf node connected to the computing power node;
the selecting a target next-hop from the next-hop list corresponding to the computing power node based on the routing policy index of the computing power node comprises:
selecting a target neighbor next-hop whose sorting matches the sub-index from neighbor next-hops sorted based on a preset sorting strategy based on the sub-index corresponding to the computing power node;
determining the target neighbor next-hop as the target next-hop if the target neighbor next-hop is included in the next-hop list corresponding to the computing power node;
wherein for the same leaf node, computing power nodes connected by ports with a same port number on different remote leaf nodes correspond to the same target neighbor next-hop.

3. The method of claim 2, wherein the sub-index is a port number of the target port.

4. The method of claim 2, wherein for any computing power node, the routing policy index corresponding to the computing power node comprises a main index for identifying a target leaf node; the method further comprising:
for any computing power node, in response to an abnormality in the target next-hop corresponding to the computing power node, selecting a standby target next-hop from the next-hop list corresponding to the computing power node based on the sub-index and main index corresponding to the computing power node; wherein for the same leaf node, computing power nodes connected by ports with the same port number on different remote leaf nodes correspond to standby target next-hops that are not completely the same;
generating a standby forwarding entry for the computing power node based on the host route of the computing power node and the corresponding standby target next-hop, and forwarding traffic sent to the computing power node based on the standby forwarding entry.

5. The method of claim 4, wherein the selecting a standby target next-hop from the next-hop list corresponding to the computing power node based on the sub-index and main index corresponding to the computing power node comprises:
selecting a standby target neighbor next-hop whose sorting matches a sum of the sub-index and main index from neighbor next-hops sorted based on a preset sorting strategy based on the sub-index and main index corresponding to the computing power node; determining the standby target neighbor next-hop as the standby target next-hop if the standby target neighbor next-hop is included in the next-hop list corresponding to the computing power node.

6. The method of claim 4, further comprising:
for any computing power node, in response to a recovery from abnormality in the target next-hop corresponding to the computing power node, generating a forwarding entry for the computing power node based on the host route of the computing power node and the corresponding target next-hop, and forwarding traffic sent to the computing power node based on the forwarding entry.

7. An apparatus for traffic forwarding, comprising:
a processor and non-transitory machine-readable storage medium,
wherein the non-transitory machine-readable storage medium is to store machine-executable instructions, the processor is to execute the instructions to perform operations comprising:
receiving routing information published by a remote leaf node; wherein the routing information comprises a host route of a computing power node connected to the remote leaf node and a routing policy index of the computing power node;
determining a next-hop list corresponding to the computing power node connected to the remote leaf node based on the received routing information;
for any computing power node connected to the remote leaf node, selecting a target next-hop from the next-hop list corresponding to the computing power node based on the routing policy index of the computing power node; wherein for different leaf nodes, the same target next-hop corresponds to the same computing power node connected to the same remote leaf node; and for the same leaf node, different target next-hops correspond to different computing power nodes connected under the same remote leaf node;
generating a forwarding entry for the computing power node based on the host route of the computing power node and the corresponding target next-hop, and
forwarding traffic sent to the computing power node based on the forwarding entry.

8. The apparatus of claim 7, wherein for any computing power node, the routing policy index corresponding to the computing power node comprises a sub-index used for identifying a target port, which is a port on a target leaf node connecting to the computing power node, and the target leaf node is a leaf node connected to the computing power node;
the selecting a target next-hop from the next-hop list corresponding to the computing power node based on the routing policy index of the computing power node, comprises:
selecting a target neighbor next-hop whose sorting matches the sub-index from neighbor next-hops sorted based on a preset sorting strategy based on the sub-index corresponding to the computing power node;
in response to a determination that the next-hop list corresponding to the computing power node comprises the target neighbor next-hop, determining the target neighbor next-hop as the target next-hop;
wherein for the same leaf node, computing power nodes connected by ports with the same port number on different remote leaf nodes correspond to the same target neighbor next-hop.

9. The apparatus of claim 8, wherein the sub-index is a port number of the target port.

10. The apparatus of claim 8, wherein for any computing power node, the routing policy index corresponding to the computing power node comprises a main index used to identify the target leaf node; the operations further comprising:
for any computing power node, in a case of an abnormality in the target next-hop corresponding to the computing power node, selecting a standby target next-hop from the next-hop list corresponding to the computing power node based on the sub-index and main index corresponding to the computing power node; wherein for the same leaf node, computing power nodes connected by ports with the same port number on different remote leaf nodes correspond to standby target next-hops that are not completely the same;
generating a standby forwarding entry for the computing power node based on the host route of the computing power node and the corresponding standby target next-hop, and forwarding traffic sent to the computing power node based on the standby forwarding entry.

11. The apparatus of claim 10, wherein the selecting a standby target next-hop from the next-hop list corresponding to the computing power node based on the sub-index and main index corresponding to the computing power node, comprises:
selecting a standby target neighbor next-hop whose sorting matches a sum of the sub-index and main index from neighboring next-hops sorted based on a preset sorting strategy based on the sub-index and main index corresponding to the computing power node;
in response to a determination that the next-hop list corresponding to the computing power node comprises the standby target neighbor next-hop, determining the standby target neighbor next-hop as the standby target next-hop.

12. The apparatus of claim 10, the operations further comprising: for any computing power node, in a case of recovery from abnormality in the target next-hop corresponding to the computing power node, generating a forwarding entry for the computing power node based on the host route of the computing power node and the corresponding target next-hop, and forwarding traffic sent to the computing power node based on the forwarding entry.
